# EUROPEAN PATENT APPLICATION

(11) **EP 4 207 559 A1**
(43) Date of publication of application: **05.07.2023**
(21) Application number: 20951607.9
(22) Date of filing: 24.12.2020
(51) Int. Cl.: H02K 1/27, H02K 1/22

(54) **ROTARY ELECTRIC MACHINE**

(30) Priority: 31.08.2020 JP 2020146000
(71) Applicant: Nidec Corporation, Minami-ku, Kyoto-shi, Kyoto 601-8205 (JP)
(72) Inventor: Tomoya, UEDA, Kyoto-shi, Kyoto 601-8205 (JP)
(74) Representative: Stöckeler, Ferdinand
(86) International application number: PCT/JP2020/048414
(87) International publication number: WO 2022/044359

(57) **Abstract**

One aspect of a rotary electric machine (1) according to the present invention includes a rotor (10) having a plurality of magnets (40). The plurality of magnets (40) include a pair of first magnets (41a, 41b) extending in directions away from each other in the circumferential direction as extending from the radially inner side toward the radially outer side when viewed in the axial direction and a second magnet (42) disposed at a circumferential position between the pair of first magnets (41a, 41b) and extending in a direction orthogonal to the radial direction when viewed in the axial direction. The rotor core (20) includes a pair of holes extending in the axial direction or a pair of groove portions (53a, 53b) each arranged in the first pattern at the position of the first angle from the d-axis with the d-axis interposed therebetween on an outer peripheral side in the radial direction as viewed in the axial direction and a pair of holes extending in the axial direction or a pair of groove portions (54a, 54b) each arranged in the second pattern at the position of the second angle, which is different from the first angle, from the d-axis with the d-axis interposed therebetween on an outer peripheral side in the radial direction as viewed in the axial direction. The rotor core (20) has at least one magnetic pole portion (70) in which the pair of holes or the pair of groove portions (53a, 53b) are arranged at positions in the first pattern and at least one magnetic pole portion (70) in which the pair of holes or the pair of groove portions (54a, 54b) are arranged at positions in the second pattern.

## Description

### Technical Field

The present invention relates to a rotary electric machine. The present application claims priority based on Japanese Patent Application No. 2020-146000 filed in Japan on August 31, 2020, the contents of which are incorporated herein by reference.

### Background Art

A rotary electric machine that includes a rotor core and a permanent magnet placed in a hole provided in the rotor core is known. For example, Patent Literature 1 describes a rotary electric machine in which three permanent magnets are arranged in a V shape.

According to the rotary electric machine described in Patent Literature 1, it is described that iron loss reduction and the like are achieved by providing a groove having a groove center within a specified range in a circumferential direction on an outer periphery of a rotor core.

### Citation List

### Patent Literature

Patent literature 1: JP 5516739 B2

### Summary of Invention

### Technical Problem

However, the rotary electric machine described above has a powering mode in which the rotary electric machine operates as a drive device and a regenerative mode in which the rotary electric machine operates as a generator, but the effect of providing groove portions varies depending on the modes. As a result, it cannot be said that noise reduction of the rotary electric machine can be necessarily achieved.

The present invention has been made in view of the above points, and an object of the present invention is to provide a rotary electric machine capable of achieving low noise.

### Solution to Problem

One aspect of a rotary electric machine according to the present invention includes a rotor rotatable about a center axis and a stator located radially outside the rotor, wherein the rotor includes a rotor core having a plurality of accommodation holes and a plurality of magnets respectively accommodated in the plurality of accommodation holes, the stator includes a stator core having an annular core back surrounding the rotor core and a plurality of teeth extending radially inward from the core back and arranged side by side at intervals in a circumferential direction and a plurality of coils attached to the stator core, the plurality of magnets include a pair of first magnets arranged at an interval in the circumferential direction and extending in directions away from each other in the circumferential direction as extending from a radially inside toward a radially outside when viewed in the axial direction and a second magnet arranged at a circumferential position between the pair of first magnets on a radially outside relative to a radially inner end portion of the pair of first magnets and extending in a direction orthogonal to the radial direction as viewed in the axial direction, the pair of first magnets and the second magnet constitute poles and include a plurality of magnets arranged in the circumferential direction, and the rotor core includes a pair of holes extending in the axial direction or a pair of groove portions provided in an outer peripheral surface which are arranged on both sides in the circumferential direction across a d-axis in a first pattern at a position of a first angle from the d-axis on an outer peripheral side in the radial direction when viewed in the axial direction and a pair of holes extending in the axial direction or a pair of groove portions provided in the outer peripheral surface which are arranged on both sides in the circumferential direction across the d-axis in a second pattern at a position of a second angle from the d-axis on the outer peripheral side in the radial direction when viewed in the axial direction, the second angle being different form the first angle, and the rotor core has at least one magnetic pole portion in which the pair of holes or the pair of groove portions are arranged at positions in the first pattern and at least one magnetic pole portion in which the pair of holes or the pair of groove portions are arranged at positions in the second pattern.

### Advantageous Effects of Invention

According to one aspect of the present invention, noise reduction can be achieved in a rotary electric machine.

### Brief Description of Drawings

Fig. 1 is a cross-sectional view illustrating a rotary electric machine according to an embodiment.
Fig. 2 is a cross-sectional view, along a line II-II in Fig. 1, illustrating a part of the rotary electrical machine according to the present embodiment.
Fig. 3 is a cross-sectional view illustrating an S-pole magnetic pole portion and part of the stator core of a rotor according to the present embodiment.
Fig. 4 is a cross-sectional view illustrating an N-pole magnetic pole portion and part of the stator core of the rotor according to the present embodiment.
Fig. 5 is a diagram illustrating a magnetic flux density distribution in a powering mode and a magnetic flux density distribution in a regenerative mode.
Fig. 6 is a diagram illustrating examples of the 48 and 24th-order components of a magnetic flux flowing between the rotor and the stator according to the present embodiment.
Fig. 7 is a diagram illustrating examples of the 48 and 24th-order components of a magnetic flux flowing between the rotor and the stator according to the present embodiment.
Fig. 8 is a diagram illustrating the values of torque ripples of the 24 and 48th-order components when a rotary electric machine having groove portions and a rotary electric machine having no groove are driven in a powering mode and a regenerative mode, respectively.

### Description of Embodiments

A rotary electric machine according to an embodiment of the present invention will be described below with reference to the drawings. Note that the scope of the present invention is not limited to the embodiment described below, but includes any modification thereof within the scope of the technical idea of the present invention. In addition, there is a case where scales, numbers, and the like of structures illustrated in the following drawings may differ from those of actual structures, for the sake of easier understanding of the structures.

A Z-axis direction appropriately illustrated in each drawing is a vertical direction in which a positive side is an "upper side" and a negative side is a "lower side". A center axis J appropriately illustrated in each drawing is an imaginary line that is parallel to the Z-axis direction and extends in the vertical direction. In the following description, the term "axial direction", "axial", or "axially" refers to an axial direction of the center axis J, that is, a direction parallel with the vertical direction. The term "radial direction", "radial", or "radially" refers to a radial direction around the center axis J. The term "circumferential direction", "circumferential", or "circumferentially" refers to a circumferential direction about the center axis J. An arrow θ appropriately illustrated in each drawing indicates the circumferential direction. The arrow θ is directed in a clockwise direction around the center axis J when viewed from above. In the following description, a side to which the arrow θ is directed in the circumferential direction with a given object as a reference, namely, a clockwise side as viewed from above is referred to as a "first circumferential side", and a side opposite to the side to which the arrow θ is directed in the circumferential direction with the given object as the reference, namely, a counterclockwise side as viewed from above is referred to as a "second circumferential side".

The vertical direction, the upper side, and the lower side are merely terms for describing a relative positional relationship between the respective units, and an actual layout relationship and the like may be other than the layout relationship represented by these terms.

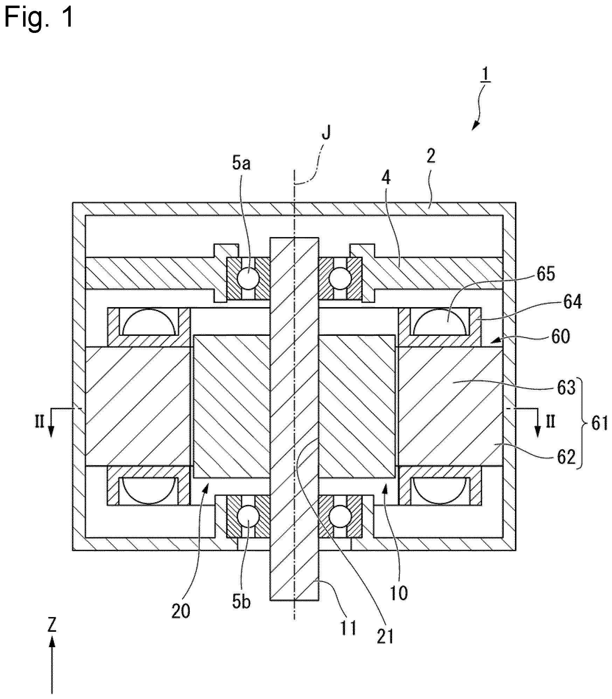

As illustrated in Fig. 1, a rotary electric machine 1 according to an embodiment is an inner rotor type rotary electric machine.

In the present embodiment, the rotary electric machine 1 is a three-phase alternate-current rotary electric machine. The rotary electric machine 1 is, for example, a three-phase motor driven by being supplied with three-phase AC power. The rotary electric machine 1 includes a housing 2, a rotor 10, a stator 60, a bearing holder 4, and bearings 5a and 5b.

The housing 2 accommodates therein the rotor 10, the stator 60, the bearing holder 4, and the bearings 5a and 5b. The bottom part of the housing 2 holds the bearing 5b. The bearing holder 4 holds the bearing 5a. For example, each of the bearings 5a and 5b is a ball bearing.

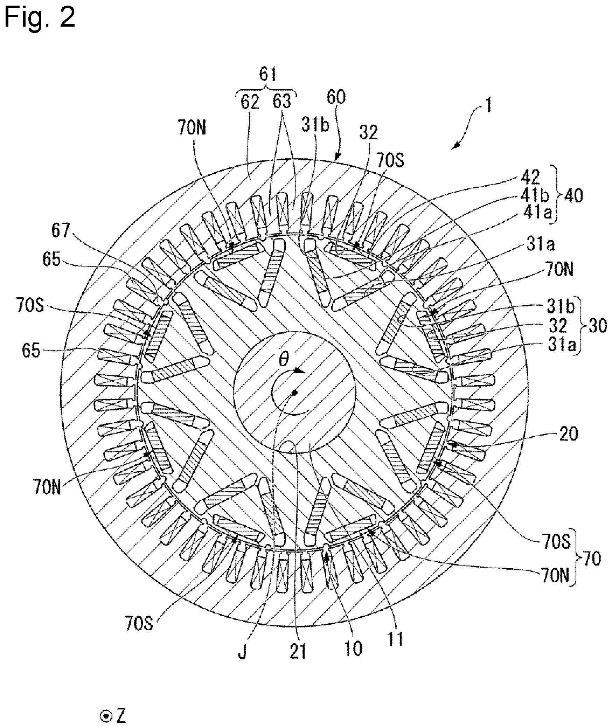

The stator 60 is positioned radially outside the rotor 10. The stator 60 includes a stator core 61, an insulator 64, and a plurality of coils 65. The stator core 61 includes a core back 62 and a plurality of teeth 63. The core back 62 is located radially outside a rotor core 20 to be described later. As illustrated in Fig. 2, the core back 62 has an annular shape surrounding the rotor core 20. The core back 62 has, for example, an annular shape centered on the center axis J.

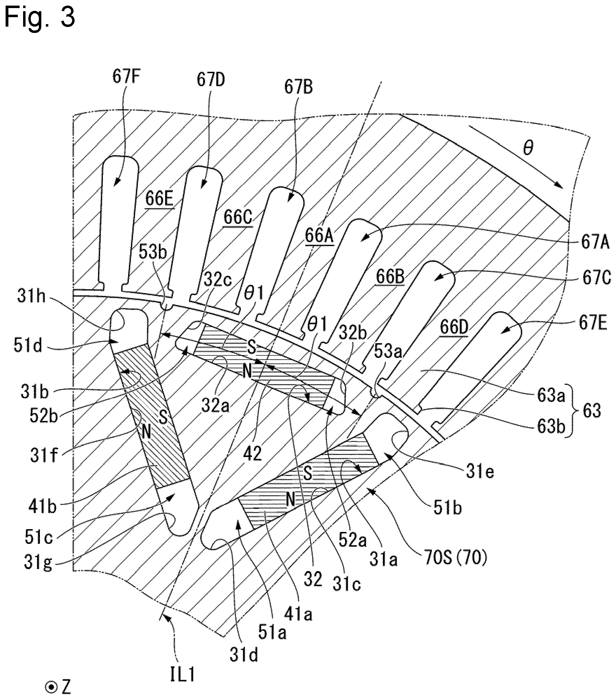

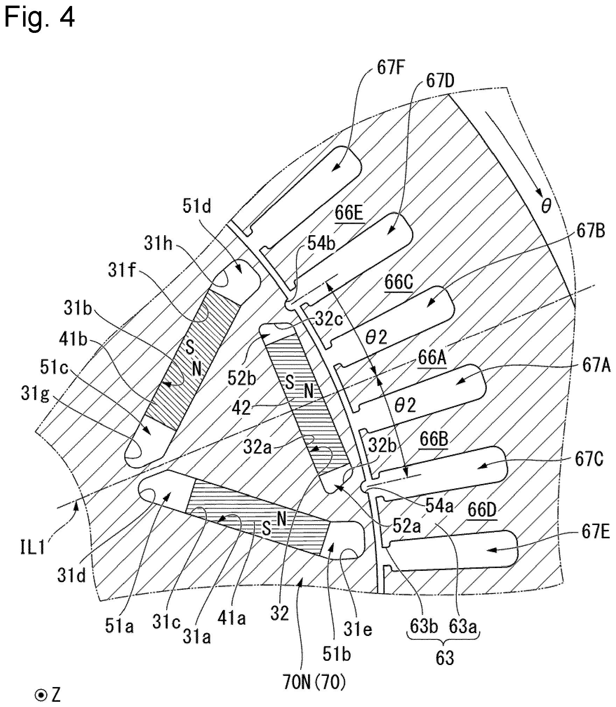

The plurality of teeth 63 extends inwardly in the radial direction from the core back 62. The teeth 63 are spaced apart from one another in the circumferential direction. The teeth 63 are equally spaced over the entire circumference along the circumferential direction. For example, 48 teeth 63 are provided. That is, the number of slots 67 of the rotary electric machine 1 is, for example, 48. As illustrated in Figs. 3 and 4, each of the plurality of teeth 63 includes a base portion 63a and an umbrella portion 63b.

The base portion 63a extends radially inward from the core back 62. The circumferential dimension of the base portion 63a is, for example, the same over the entire radial direction. The circumferential dimension of the base portion 63a may decrease, for example, toward the radially inward.

The umbrella portion 63b is provided at the radially inner end portion of the base portion 63a. The umbrella portion 63b protrudes from the base portion 63a to both sides in the circumferential direction. The circumferential dimension of the umbrella portion 63b is larger than the circumferential dimension of the base portion 63a at the radially inner end. The radially inner surface of the umbrella portion 63b is a curved surface along the circumferential direction. The radially inner surface of the umbrella portion 63b extends in an arc shape centered on a center axis J when viewed in the axial direction. The radially inner surface of the umbrella portion 63b radially faces the outer peripheral surface of the rotor core 20 described later with a gap interposed therebetween. The umbrella portions 63b of the teeth 63 adjacent to each other in the circumferential direction are arranged side by side with a gap therebetween in the circumferential direction.

The plurality of coils 65 are attached to the stator core 61. As illustrated in Fig. 1, the coils 65 are attached to the teeth 63 through the insulator 64. In the present embodiment, distributed winding is used for the coils 65. That is, each coil 65 is wound across the plurality of teeth 63. In the present embodiment, full-pitch winding is used for the coils 65. That is, the circumferential pitch between slots of the stator 60 into which the coils 65 are inserted is equal to the circumferential pitch of magnetic poles generated when three-phase AC power is supplied to the stator 60. The number of poles of the rotary electric machine 1 is, for example, eight. That is, the rotary electric machine 1 is, for example, an 8-pole 48 slot rotary electric machine. As described above, in the rotary electric machine 1 according to the present embodiment, when the number of poles is N, the number of slots is N × 6. Referring to Figs. 3, 4, 6, and 7, the coil 65 is not illustrated. Referring to Figs. 2, 3, 4, 6, and 7, the insulator 64 is not illustrated.

The rotor 10 is rotatable about the center axis J. As illustrated in Fig. 2, the rotor 10 includes a shaft 11, a rotor core 20, and a plurality of magnets 40. The shaft 11 has a columnar shape that extends in the axial direction about the center axis J. As illustrated in Fig. 1, the shaft 11 is rotatably supported about the center axis J by the bearings 5a and 5b.

The rotor core 20 is a magnetic body. The rotor core 20 is fixed to an outer peripheral surface of the shaft 11. The rotor core 20 has a through hole 21 that penetrates the rotor core 20 in the axial direction. As illustrated in Fig. 2, the through hole 21 has a circular shape centered on the center axis J as viewed in the axial direction.

The shaft 11 passes through the through hole 21. The shaft 11 is fixed inside the through hole 21 by press fitting, for example. Although not illustrated, the rotor core 20 is configured by, for example, a plurality of electromagnetic steel plates laminated in the axial direction.

The rotor core 20 has a plurality of accommodation holes 30. For example, the plurality of accommodation holes 30 penetrates the rotor core 20 in the axial direction. The plurality of magnets 40 are accommodated in the plurality of accommodation holes 30, respectively. A method for fixing the magnet 40 in the accommodation hole 30 is not particularly limited. The plurality of accommodation holes 30 includes a pair of first accommodation holes 31a and 31b and a second accommodation hole 32.

The type of the plurality of magnets 40 is not particularly limited. The magnet 40 may be, for example, a neodymium magnet or a ferrite magnet. The plurality of magnets 40 includes a pair of first magnets 41a and 41b and a second magnet 42. The pair of first magnets 41a and 41b and the second magnet 42 constitute a pole.

In the present embodiment, a plurality of the pairs of first accommodation holes 31a and 31b, a plurality of the pairs of first magnets 41a and 41b, a plurality of the second accommodation holes 32, and a plurality of the second magnets 42 are provided at intervals in the circumferential direction. Eight pairs of first accommodation holes 31a and 31b, eight pairs of first magnets 41a and 41b, eight second accommodation holes 32, and eight second magnets 42 are provided, for example.

The rotor 10 includes a plurality of magnetic pole portions 70 each including the pair of first accommodation holes 31a and 31b, the pair of first magnets 41a and 41b, the second accommodation hole 32, and the second magnet 42. For example, eight magnetic pole portions 70 are provided. For example, the plurality of magnetic pole portions 70 are arranged at equal intervals over an entire circumference along the circumferential direction. The plurality of magnetic pole portions 70 includes a plurality of magnetic pole portions 70N in which the magnetic pole on the outer peripheral surface of the rotor core 20 is an N pole and a plurality of magnetic pole portions 70S in which the magnetic pole on the outer peripheral surface of the rotor core 20 is an S pole. For example, four magnetic pole portions 70N and four magnetic pole portions 70S are provided. The four magnetic pole portions 70N and the four magnetic pole portions 70S are alternately arranged along the circumferential direction. The configurations of the magnetic pole portions 70 are similar to each other except that the magnetic poles of the outer peripheral surface of the rotor core 20 are different and the circumferential positions are different and in the positions where a pair of groove portions 53a and 53b and a pair of groove portions 54a and 54b described later are provided.

As illustrated in Figs. 3 and 4, the pair of first accommodation holes 31a and 31b is spaced from each other in the circumferential direction in each of the magnetic pole portions 70. For example, the first accommodation hole 31a is located on the first circumferential side (+θ side) of the first accommodation hole 31b. For example, the first accommodation holes 31a and 31b extend substantially linearly in a direction inclined obliquely with respect to the radial direction when viewed in the axial direction. The pair of first accommodation holes 31a and 31b extends in directions away from each other in the circumferential direction from inside to outside in the radial direction when viewed in the axial direction. That is, a circumferential distance between the first accommodation hole 31a and the first accommodation hole 31b increases from inside to outside in the radial direction. The first accommodation hole 31a is located, for example, further to the first circumferential side as it extends from inside to outside in the radial direction. The first accommodation hole 31b is, for example, located further to the second circumferential side (-θ side) as it extends from inside to outside in the radial direction. The outer radial ends of the first accommodation holes 31a and 31b are located at an outer peripheral end of the rotor core 20 in the radial direction.

The first accommodation hole 31a and the first accommodation hole 31b are located, for example, with a magnetic pole center line IL1 in Fig. 3 constituting a d axis therebetween in the circumferential direction when viewed in the axial direction. The magnetic pole center line IL1 is a virtual line passing through the center of the magnetic pole portion 70 in the circumferential direction and the center axis J and extending in the radial direction. The first accommodation hole 31a and the first accommodation hole 31b are arranged so as to be symmetrical with respect to the magnetic pole center line IL1 when viewed in the axial direction, for example. Hereinafter, the description of the configurations of the first accommodation hole 31b same as the configurations of the first accommodation hole 31a may be omitted except that the first accommodation holes 31a and 31b are symmetrical with respect to the magnetic pole center line IL1.

The first accommodation hole 31a includes a first linear portion 31c, an inner end part 31d, and an outer end part 31e. The first linear portion 31c extends linearly in the direction in which the first accommodation hole 31a extends when viewed in the axial direction. The first linear portion 31c has, for example, a rectangular shape when viewed in the axial direction. The inner end part 31d is connected to an inner radial end of the first linear portion 31c. The inner end part 31d is an inner radial end of the first accommodation hole 31a. The outer end part 31e is connected to an outer radial end of the first linear portion 31c. The outer end part 31e is an outer radial end of the first accommodation hole 31a. The first accommodation hole 31b includes a first linear portion 31f, an inner end part 31g, and an outer end part 31h.

The second accommodation hole 32 is located between the outer radial ends of the pair of first accommodation holes 31a and 31b in the circumferential direction. That is, in the present embodiment, the second accommodation hole 32 is located between the outer end part 31e and the outer end part 31h in the circumferential direction. The second accommodation hole 32 extends, for example, substantially linearly in a direction orthogonal to the radial direction when viewed in the axial direction. The second accommodation hole 32 extends, for example, in a direction orthogonal to the magnetic pole center line IL1 when viewed in the axial direction. The pair of first accommodation holes 31a and 31b and the second accommodation hole 32 are located along, for example, a V shape when viewed in the axial direction.

In the present specification, "a given object extends in a direction orthogonal to a given direction" includes not only a case where the given object extends in a direction strictly orthogonal to the given direction but also a case where the given object extends in a direction substantially orthogonal to the given direction. The "direction substantially orthogonal to a given direction" includes, for example, a direction inclined within a range of about several degrees [°] with respect to the direction strictly orthogonal to the given direction due to a tolerance or the like at the time of manufacturing.

The magnetic pole center line IL1 passes through the circumferential center of the second accommodation hole 32 when viewed in the axial direction. That is, the circumferential position of the circumferential center of the second accommodation hole 32 coincides with, for example, the circumferential position of the circumferential center of the magnetic pole portion 70. The second accommodation hole 32 has, for example, a symmetrical shape with respect to the magnetic pole center line IL1 as viewed in the axial direction. The second accommodation hole 32 is located at an outer peripheral end of the rotor core 20 in the radial direction.

The second accommodation hole 32 includes a second linear portion 32a, a first end part 32b, and a second end part 32c. The second linear portion 32a extends linearly in the direction in which the second accommodation hole 32 extends when viewed in the axial direction. The second linear portion 32a has, for example, a rectangular shape when viewed in the axial direction. The first end part 32b is connected to an end of the second linear portion 32a on the first circumferential side (+θ side). The first end part 32b is an end of the second accommodation hole 32 on the first circumferential side. The first end part 32b is located on the second circumferential side (-θ side) of the outer end part 31e of the first accommodation hole 31a so as to be spaced from the outer end part 31e. The second end part 32c is connected to an end of the second linear portion 32a on the second circumferential side (-θ side). The second end part 32c is an end of the second accommodation hole 32 on the second circumferential side. The second end part 32c is located on the first circumferential side of the outer end part 31h of the first accommodation hole 31b so as to be spaced from the outer end part 31h.

The pair of first magnets 41a and 41b is accommodated in the pair of first accommodation holes 31a and 31b, respectively. The first magnet 41a is accommodated in the first accommodation hole 31a. The first magnet 41b is accommodated in the first accommodation hole 31b. The pair of first magnets 41a and 41b has, for example, a rectangular shape when viewed in the axial direction. Although not illustrated, for example, the first magnets 41a and 41b have a rectangular parallelepiped shape. Although not illustrated, for example, the first magnets 41a and 41b are provided over the entire axial direction in the first accommodation holes 31a, and 31b. The pair of first magnets 41a and 41b are arranged at an interval in the circumferential direction. The first magnet 41a is located on the first circumferential side (+θ side) of the first magnet 41b.

The first magnet 41a extends along the first accommodation hole 31a when viewed in the axial direction. The first magnet 41b extends along the first accommodation hole 31b when viewed in the axial direction. The first magnets 41a and 41b extend, for example, substantially linearly in a direction inclined obliquely with respect to the radial direction when viewed in the axial direction. The pair of first magnets 41a and 41b extends in directions away from each other in the circumferential direction from inside to outside in the radial direction when viewed in the axial direction. That is, the circumferential distance between the first magnet 41a and the first magnet 41b increases as they extend from inside to outside in the radial direction.

The first magnet 41a is located further to the first circumferential side (+θ side) as it extends from inside to outside in the radial direction. The first magnet 41b is located further to the second circumferential side (-θ side) as it extends from inside to outside in the radial direction. The first magnet 41a and the first magnet 41b are located with the magnetic pole center line IL1 therebetween in the circumferential direction when viewed in the axial direction, for example. The first magnet 41a and the first magnet 41b are located so as to be symmetrical with respect to the magnetic pole center line IL1 when viewed in the axial direction, for example. Hereinafter, the description of the configurations of the first magnet 41b same as the configurations of the first magnet 41a may be omitted except that the first magnets 41a and 41b are symmetrical with respect to the magnetic pole center line IL1.

The first magnet 41a is fitted in the first accommodation hole 31a. More specifically, the first magnet 41a is fitted in the first linear portion 31c. Of the side surfaces of the first magnet 41a, both side surfaces in the direction orthogonal to the direction in which the first linear portion 31c extends are in contact with, for example, the inner side surfaces of the first linear portion 31c. In the direction in which the first linear portion 31c extends when viewed in the axial direction, the length of the first magnet 41a is the same as, for example, the length of the first linear portion 31c.

When viewed in the axial direction, each end of the first magnet 41a in the direction in which the first magnet 41a extends is separated from the corresponding end of the first accommodation hole 31a in the direction in which the first accommodation hole 31a extends. When viewed in the axial direction, the inner end part 31d and the outer end part 31e are located adjacent to the first magnet 41a on each side of the first magnet 41a in the direction in which the first magnet 41a extends. In the present embodiment, the inner end part 31d constitutes a first flux barrier portion 51a. The outer end part 31e constitutes a first flux barrier portion 51b. That is, the rotor core 20 includes a pair of first flux barrier portions 51a and 51b arranged with the first magnet 41a interposed therebetween in the direction in which the first magnet 41a extends when viewed in the axial direction. The rotor core 20 includes a pair of first flux barrier portions 51c and 51d arranged with the first magnet 41b interposed therebetween in the direction in which the first magnet 41b extends when viewed in the axial direction.

As described above, the rotor core 20 includes a pair of the first flux barrier portions 51a and 51b arranged with the first magnet 41a interposed therebetween in the direction in which the first magnet 41a extends and a pair of the first flux barrier portions 51c and 51d arranged with the first magnet 41b interposed therebetween in the direction in which the first magnet 41b extends, when viewed in the axial direction. The first flux barrier portions 51a, 51b, 51c, and 51d and second flux barrier portions 52a and 52b described later, and the groove portions 53a, 53b, 54a, and 54b are portions where the flow of magnetic flux can be suppressed. That is, magnetic flux hardly passes through each of the groove portions and each of the flux barrier portions. Each flux barrier portion and each groove portion are not particularly limited as long as they can suppress the flow of magnetic flux, and they may include a void and may include a non-magnetic portion, such as a resin portion.

The second magnet 42 is accommodated in the second accommodation hole 32. The second magnet 42 is located at a circumferential position between the pair of first magnets 41a and 41b on the outside in the radial direction with respect to the inner radial ends of the pair of first magnets 41a and 41b. The second magnet 42 extends along the second accommodation hole 32 when viewed in the axial direction. The second magnet 42 extends in a direction orthogonal to the radial direction as viewed in the axial direction. The pair of first magnets 41a and 41b and the second magnet 42 are located along, for example, a V shape when viewed in the axial direction.

In the present specification, "the second magnet is located at the circumferential position between the pair of first magnets" means that the circumferential position of the second magnet may be included in the circumferential position between the pair of first magnets, and the radial position of the second magnet with respect to the first magnet is not particularly limited.

The second magnet 42 has, for example, a symmetrical shape with respect to the magnetic pole center line IL1 as viewed in the axial direction. The second magnet 42 has, for example, a rectangular shape when viewed in the axial direction. Although not illustrated, for example, the second magnet 42 has a rectangular parallelepiped shape. Although not illustrated, the second magnet 42 is provided over the entire inside of the second accommodation hole 32 in the axial direction, for example. The inner radial part of the second magnet 42 is located, for example, between the outer radial ends of the pair of first magnets 41a and 41b in the circumferential direction. The outer radial part of the second magnet 42 is located, for example, radially outside the pair of first magnets 41a and 41b.

The second magnet 42 is fitted in the second accommodation hole 32. More specifically, the second magnet 42 is fitted in the second linear portion 32a. Of the side surfaces of the second magnet 42, both side surfaces in the radial direction orthogonal to the direction in which the second linear portion 32a extends are in contact with, for example, the inner side surfaces of the second linear portion 32a. In the direction in which the second linear portion 32a extends when viewed in the axial direction, the length of the second magnet 42 is, for example, the same as the length of the second linear portion 32a.

When viewed in the axial direction, each end of the second magnet 42 in the direction in which the second magnet 42 extends is spaced from the corresponding end of the second accommodation hole 32 in the direction in which the second accommodation hole 32 extends. When viewed in the axial direction, the first end part 32b and the second end part 32c are located adjacent to the second magnet 42 on each side of the second magnet 42 in the direction in which the second magnet 42 extends. In the present embodiment, the first end part 32b constitutes a second flux barrier portion 52a. The second end part 32c constitutes a second flux barrier portion 52b. That is, the rotor core 20 includes a pair of second flux barrier portions 52a and 52b arranged with the second magnet 42 interposed therebetween in the direction in which the second magnet 42 extends when viewed in the axial direction. The pair of second flux barrier portions 52a and 52b and the second magnet 42 are located circumferentially between the first flux barrier portion 51b located on the outer radial side out of the pair of first flux barrier portions 51a and 51b provided across the first magnet 41a and the first flux barrier portion 51d located on the outer radial side out of the pair of first flux barrier portions 51c and 51d provided across the first magnet 41b.

The magnetic poles of the first magnet 41a are arranged along a direction orthogonal to the direction in which the first magnet 41a extends when viewed in the axial direction. The magnetic poles of the first magnet 41b are arranged along a direction orthogonal to the direction in which the first magnet 41b extends when viewed in the axial direction. The magnetic poles of the second magnet 42 are arranged along the radial direction.

The magnetic pole located on the outer radial side out of the magnetic poles of the first magnet 41a, the magnetic pole located on the outer radial side out of the magnetic poles of the first magnet 41b, and the magnetic pole located on the outer radial side out of the magnetic poles of the second magnet 42 are the same. The magnetic pole located on the inner radial side out of the magnetic poles of the first magnet 41a, the magnetic pole located on the inner radial side out of the magnetic poles of the first magnet 41b, and the magnetic pole located on the inner radial side out of the magnetic poles of the second magnet 42 are the same.

In the magnetic pole portion 70S, the magnetic pole located on the outer radial side out of the magnetic poles of the first magnet 41a, the magnetic pole located on the outer radial side out of the magnetic poles of the first magnet 41b, and the magnetic pole located on the outer radial side out of the magnetic poles of the second magnet 42 are, for example, an S pole as illustrated in Fig. 3. In the magnetic pole portion 70S, the magnetic pole located on the inner radial side out of the magnetic poles of the first magnet 41a, the magnetic pole located on the inner radial side out of the magnetic poles of the first magnet 41b, and the magnetic pole located on the inner radial side out of the magnetic poles of the second magnet 42 are, for example, an N pole.

As illustrated in Fig. 4, in the magnetic pole portion 70N, the magnetic poles of each magnet 40 are inverted with respect to those of the magnetic pole portion 70S. That is, in the magnetic pole portion 70N, the magnetic pole located on the outer radial side out of the magnetic poles of the first magnet 41a, the magnetic pole located on the outer radial side out of the magnetic poles of the first magnet 41b, and the magnetic pole located on the outer radial side out of the magnetic poles of the second magnet 42 are, for example, an N pole. In the magnetic pole portion 70N, the magnetic pole located on the inner radial side out of the magnetic poles of the first magnet 41a, the magnetic pole located on the inner radial side out of the magnetic poles of the first magnet 41b, and the magnetic pole located on the inner radial side out of the magnetic poles of the second magnet 42 are, for example, an S pole.

As illustrated in Fig. 3, the rotor core 20 has groove portions 53a and 53b recessed radially inward from the outer peripheral surface of the rotor core 20 in the magnetic pole portion 70S. In the present embodiment, the pair of groove portions 53a and 53b are provided for each magnetic pole portion 70S. In each magnetic pole portion 70S, the groove portion 53a and the groove portion 53b are, for example, arranged line-symmetrically with respect to the magnetic pole center line IL1 when viewed in the axial direction. Hereinafter, a description of the groove portion 53b may be omitted concerning the same configuration as that of the groove portion 53a.

The inner edges of the groove portions 53a and 53b as viewed in the axial direction have, for example, an arc shape recessed radially inward. The radii of the arcs constituting the groove portions 53a and 53b are not particularly limited, but as an example, the radius is 1 mm from the viewpoint of manufacturing. The groove portion 53a is disposed at a position of a first angle Θ1 on one side in the circumferential direction from the magnetic pole center line IL1. The first angle Θ1 is an angle at which a straight line passing through the arc center of the groove portion 53a and extending in the radial direction intersects the magnetic pole center line IL1. The groove portion 53b is disposed at a position of a first angle Θ1 on the other side in the circumferential direction from the magnetic pole center line IL1. The first angle Θ1 is an angle at which a straight line passing through the arc center of the groove portion 53b and extending in the radial direction intersects the magnetic pole center line IL1. When viewed in the axial direction, the groove portion 53a and the groove portion 53b are arranged in the first pattern at the position of the first angle Θ1 from the magnetic pole center line IL1.

The circumferential positions of the groove portions 53a and 53b in the first pattern are positions where the torque ripple due to the 48th component of the magnetic flux flowing between the rotor 10 and the stator 60 can be suitably reduced as the third flux barrier portion when the rotary electric machine 1 operates in the powering mode. The groove portion 53a is disposed between the first flux barrier portion 51b and the second flux barrier portion 52a in the circumferential direction. The groove portion 53b is disposed between the first flux barrier portion 51d and the second flux barrier portion 52b in the circumferential direction. The groove portions 53a and 53b are located on an extension line in the direction in which the second magnet 42 extends when viewed in the axial direction.

In the present embodiment, the circumferential dimensions (maximum lengths) of the groove portions 53a and 53b are smaller than the circumferential dimensions of the first flux barrier portions 51a, 51b, 51c, and 51d and the circumferential dimensions of the second flux barrier portions 52a and 52b. In the present embodiment, the circumferential dimensions of the groove portions 53a and 53b are the diameters of the arc-shaped groove portions 53a and 53b.

As illustrated in Fig. 4, the rotor core 20 has groove portions 54a and 54b recessed radially inward from the outer peripheral surface of the rotor core 20 in the magnetic pole portion 70N. In the present embodiment, the pair of groove portions 54a and 54b are provided for each magnetic pole portion 70N. In each magnetic pole portion 70N, the groove portion 54a and the groove portion 54b are, for example, arranged line-symmetrically with respect to the magnetic pole center line IL1 when viewed in the axial direction. Hereinafter, a description of the groove portion 54b may be omitted concerning the same configuration as that of the groove portion 54a.

The inner edges of the groove portions 54a and 54b as viewed in the axial direction have, for example, an arc shape recessed radially inward. The radii of the arcs constituting the groove portions 54a and 54b are not particularly limited, but as an example, the radius is 1 mm from the viewpoint of manufacturing. The groove portion 54a is disposed at a position of a second angle Θ2 on one side in the circumferential direction from the magnetic pole center line IL1. The second angle Θ2 is an angle at which a straight line passing through the arc center of the groove portion 54a and extending in the radial direction intersects the magnetic pole center line IL1. The groove portion 54b is disposed at the position of the second angle Θ2 on the other side in the circumferential direction from the magnetic pole center line IL1. The second angle Θ2 is an angle at which a straight line extending in the radial direction passing through the arc center of the groove portion 54b intersects the magnetic pole center line IL1, and is smaller than the first angle Θ1 of the first pattern in the magnetic pole portion 70S. When viewed in the axial direction, the groove portion 54a and the groove portion 54b are arranged in the second pattern at the position of the second angle Θ2 smaller than the first angle Θ1 of the first pattern from the magnetic pole center line IL1. The groove portion 54a is disposed at a position closer to the second flux barrier portion 52a in the circumferential direction than the groove portion 53a. The groove portion 54b is disposed at a position closer to the second flux barrier portion 52b in the circumferential direction than the groove portion 53b.

The circumferential positions of the groove portions 54a and 54b in the second pattern are positions where the torque ripple due to the 48th component of the magnetic flux flowing between the rotor 10 and the stator 60 can be suitably reduced as the third flux barrier portion when the rotary electric machine 1 operates in the regenerative mode. The groove portion 54a is disposed between the first flux barrier portion 51b and the second flux barrier portion 52a in the circumferential direction. The groove portion 54b is disposed between the first flux barrier portion 51d and the second flux barrier portion 52b in the circumferential direction. The groove portions 54a and 54b are located on an extension line in the direction in which the second magnet 42 extends when viewed in the axial direction.

In the present embodiment, the circumferential dimensions (maximum lengths) of the groove portions 54a and 54b are smaller than the circumferential dimensions of the first flux barrier portions 51a, 51b, 51c, and 51d and the circumferential dimensions of the second flux barrier portions 52a and 52b. In the present embodiment, the circumferential dimensions of the groove portions 54a and 54b are the diameters of the arc-shaped groove portions 54a and 54b. The circumferential dimensions of the groove portions 54a and 54b are the same as the circumferential dimensions of the groove portions 53a and 53b.

In a given state where the circumferential center of the second magnet 42 is disposed at the same circumferential position as the circumferential center of a given tooth 63, the groove portions 53a and 53b are located radially inside the other tooth 63. In other words, in the given state, the circumferential positions of the groove portions 53a and 53b overlap the other one of the teeth 63.

Note that, in the present specification, "a given object is located radially inside another object " means that the given object is located radially inside the other objects with respect to the center axis, and in addition, the circumferential position of at least a part of the given object may be the same as the circumferential position of at least a part of the other objects. Figs. 2, 3, 4, 6, and 7 illustrate examples of the given state. In Figs. 2 to 4 and 6 to 7, the tooth 63 whose circumferential center is disposed at the same circumferential position as the circumferential center of the second magnet 42 is referred to as a tooth 66A. That is, in the given state illustrated in Figs. 2, 3, 4, 6, and 7, the tooth 66A corresponds to the "one given tooth". In in the given state illustrated in Figs. 2, 3, 4, 6, and 7, the magnetic pole center line IL1 passes through the circumferential center of the tooth 66A when viewed in the axial direction. In addition, in the present specification, a "given state " is a state in which "the circumferential center position of one tooth 66A coincides with the magnetic pole center line IL1 that is the d-axis".

In the given state illustrated in Figs. 2, 3, 4, 6, and 7, the tooth 63 adjacent to the first circumferential side (+θ side) of the teeth 66A is referred to as a tooth 66B. The tooth 63 adjacent to the second circumferential side (-θ side) of the tooth 66A is referred to as a tooth 66C. The tooth 63 adjacent to the first circumferential side of the tooth 66B is referred to as a tooth 66D. The tooth 63 adjacent to the second circumferential side of the tooth 66C is referred to as a tooth 66E.

As illustrated in Fig. 3, in a given state, the groove portion 53a is located radially inside the tooth 66D. The groove portion 53b is located radially inside the tooth 66E. That is, in a given state, the teeth 66D and 66E correspond to "another tooth". In this case, each of the teeth 66D and 66E is a tooth is two teeth away from the tooth 66A corresponding to "one given tooth " in the circumferential direction. That is, in the present embodiment, each of the teeth 66D and 66E which is "the other one of the teeth" is the tooth 63 arranged two teeth away from the "given one of the teeth" in the circumferential direction.

In the present embodiment, in a given state, the groove portion 53a is located radially inside a portion of the tooth 66D on a side (-θ side) close to the circumferential center of the second magnet 42. In a given state, the groove portion 53a overlaps an end portion of the umbrella portion 63b of the tooth 66D on the second circumferential side (-θ side) in the radial direction when viewed in the axial direction.

In the present embodiment, in a given state, the groove portion 53b is located radially inside a portion of the tooth 66E on a side (-θ side) close to the circumferential center of the second magnet 42. In a given state, the groove portion 53b overlaps an end portion of the umbrella portion 63b of the tooth 66E on the first circumferential side (+θ side) in the radial direction when viewed in the axial direction.

As illustrated in Fig. 4, in a given state, the center position of the groove portion 54a is located radially inside the slot 67C. In a given state, the groove portion 54a is located radially inside a portion of the tooth 66B on a side (+θ side) farther from the circumferential center of the second magnet 42. In a given state, the groove portion 54a overlaps an end portion of the umbrella portion 63b of the tooth 66B on the first circumferential side (+θ side) in the radial direction when viewed in the axial direction.

In the present embodiment, in a given state, the center position of the groove portion 54b is located radially inside the slot 67D. In a given state, the groove portion 54b is located radially inside a portion of the tooth 66C on a side (-θ side) farther from the circumferential center of the second magnet 42. In a given state, the groove portion 54b overlaps an end portion of the umbrella portion 63b of the tooth 66C on the second circumferential side (-θ side) when viewed in the axial direction.

In a given state, at least a part of the tooth 66B and at least a part of the tooth 66C are located radially outside the second magnet 42. The tooth 66B is the tooth 63 disposed between the teeth 66A and 66D in the circumferential direction so as to be adjacent to each other. The tooth 66C is the tooth 63 disposed between the teeth 66A and 66E in the circumferential direction so as to be adjacent to each other. That is, in a given state, at least parts of the teeth 66B and 66C which are arranged with the tooth 66A, which is the "given one tooth", therebetween and the teeth 66D and 66E, each of which is "the other one tooth", in the circumferential direction so as to be adjacent to each other, are located radially outside the second magnet 42. In a given state, for example, a portion of the tooth 66B on the second circumferential side (-θ side) and a portion of the teeth 66C on one circumferential side (+ θ side) are located radially outside the second magnet 42.

In a given state, of the pair of first flux barrier portions 51a and 51b arranged with the first magnet 41a interposed therebetween, the first flux barrier portion 51b located on the radially outside is located radially inside a portion of the teeth 66D on the side (+θ side) farther from the circumferential center of the second magnet 42.

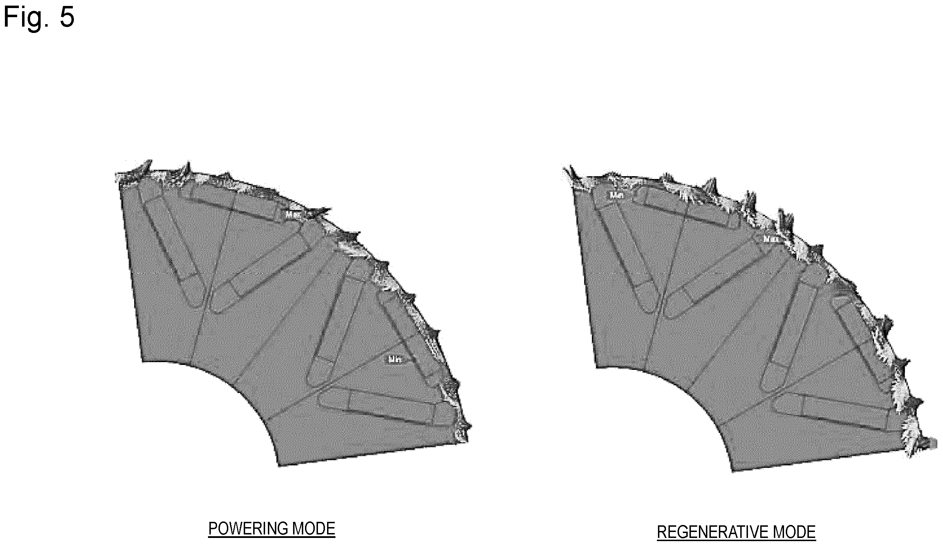

According to the present embodiment, since the groove portions 53a and 53b and the groove portions 54a and 54b are provided, the torque ripple can be reduced in both the powering mode and the regenerative mode. Fig. 5 is a diagram illustrating the magnetic flux density distribution of a 12th-order electric magnetic flux in the powering mode and the magnetic flux density distribution of a 12th-order electric magnetic flux in the regenerative mode. As illustrated in Fig. 5, a 12th-order magnetic flux is generated at different positions in the powering mode and the regenerative mode. Therefore, when a groove portion is provided only in one of the magnetic pole portion 70N and the magnetic pole portion 70S, the torque ripple can be reduced only in either the powering mode or the regenerative mode. In the present embodiment, the groove portions 53a and 53b capable of reducing the torque ripple in the powering mode are provided at positions where the magnetic flux density in the magnetic pole portion 70S is high, and the groove portions 54a and 54b capable of reducing the torque ripple in the regenerative mode are provided at positions where the magnetic flux density in the magnetic pole portion 70N is high.

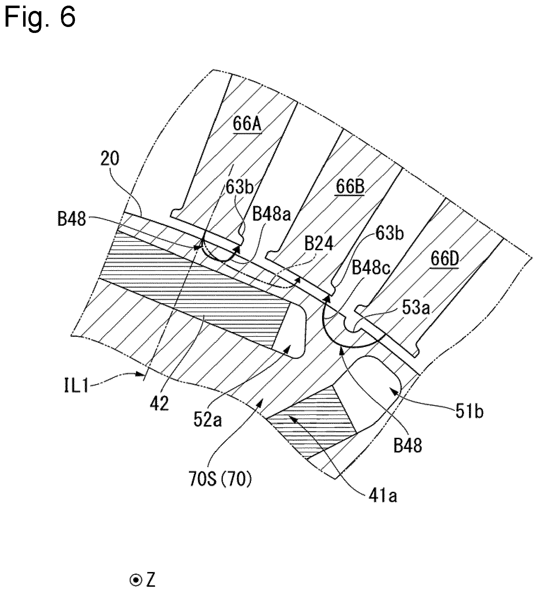

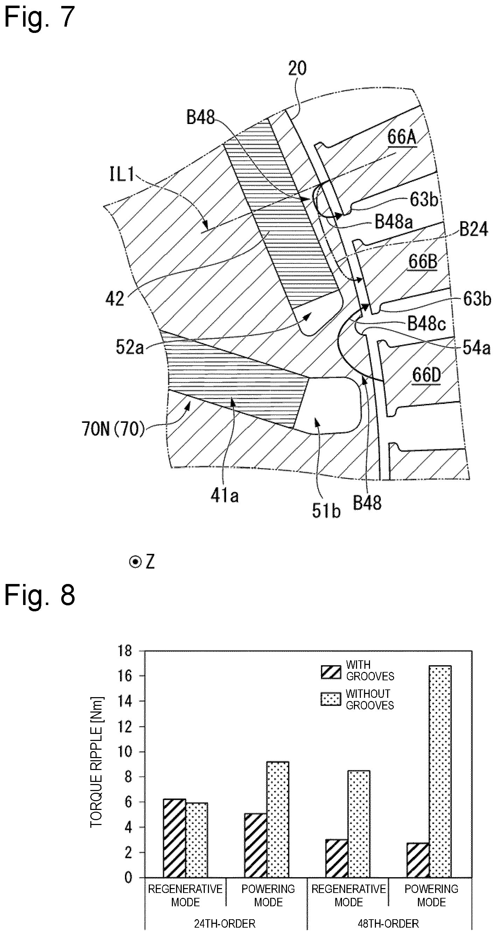

The details will be described below. As illustrated in Figs. 6 and 7, the magnetic flux flowing between the rotor 10 and the stator 60 may include a magnetic flux that is released from the teeth 63 and returns through the rotor core 20 back to the same teeth 63 again. A magnetic flux B48 illustrated in Figs. 6 and 7 is, for example, the 48th-order component of the magnetic flux flowing between the rotor 10 and the stator 60.

In the magnetic pole portion 70S, a magnetic flux B48a of the magnetic flux B48 illustrated in Fig. 6 is, for example, a magnetic flux that is released radially inward from the circumferential center of the tooth 66A, passes through the rotor core 20, and returns to an end portion of the umbrella portion 63b of the tooth 66A on the first circumferential side (+ θ side). A magnetic flux B48a passes through a portion of the rotor core 20 which is located radially outside the second magnet 42.

For example, the magnetic flux B48 of the 48th-order component flowing between rotor core 20 and stator 60 also includes, for example, a magnetic flux B48c illustrated in Fig. 6. The magnetic flux B48c is a magnetic flux flowing from the circumferential center of the tooth 66D to the tooth 66B adjacent to the tooth 66D through the rotor core 20. For example, the magnetic flux B48c is released from the tooth 66D into the rotor core 20, and then flows to the end of the umbrella portion 63b of the tooth 66B which is located on the first circumferential side (+θ side). When the magnetic flux B48c described above flows in large amount, the circumferential balance of the magnetic flux B48 of the 48th-order component is lost, and the torque ripple tends to be large.

On the other hand, according to the present embodiment, the rotor core 20 has the groove portion 53a. In a given state, the groove portion 53a recessed radially inward is disposed on the side (-θ side) closer to the circumferential center of the second magnet 42 than the circumferential center of the other one tooth 66D and reduces the gap with the first flux barrier portion 51b and the gap with the second flux barrier portion 52a. Therefore, the groove portion 53a easily narrows the path through which the magnetic flux B48c flows. As a result, it is possible to suppress the magnetic flux B48c from flowing much, and it is possible to suppress the circumferential balance of the magnetic flux B48 of the 48th-order component from being lost. Therefore, noise reduction can be achieved by further reducing the torque ripple during an operation in the powering mode.

According to the present embodiment, in a given state, at least a part of the groove portion 53a is located radially inside the other one tooth 66D. Therefore, it is easy to suitably narrow the path through which the magnetic flux B48c discharged from the tooth 66D flows along the groove portion 53a. This makes it possible to further suppress the magnetic flux B48c from flowing in large amount. Therefore, noise reduction can be achieved by further reducing the torque ripple during an operation in the powering mode.

According to the present embodiment, the groove portion 53a is located radially outside the first flux barrier portion 51b located radially outside in the pair of first flux barrier portions 51a and 51b. Therefore, the space between the groove portion 53a and the first flux barrier portion 51b in the radial direction can be suitably narrowed. This makes it easy to more suitably narrow the path through which the magnetic flux B48c released from the tooth 66D flows. Accordingly, it is possible to further suppress the magnetic flux B48c from flowing in large amount. Therefore, noise reduction can be achieved by further reducing the torque ripple during an operation in the powering mode.

The effect obtained by providing the groove portion 53a described above can be similarly obtained by the groove portion 53b. In the present embodiment, since the pair of groove portions 53a and 53b are provided, noise reduction can be achieved by more suitably reducing the torque ripple when operating in the powering mode.

On the other hand, since the second magnet 42 is provided, the magnetic flux B48a released from the tooth 66A turns relatively small in a portion of the rotor core 20 which is located radially outside the second magnet 42 and returns to the tooth 66A. The position of the umbrella portion 63b of the tooth 66D in the rotor 20 on the second circumferential side is a position where the magnetic flux density in the powering mode is higher than in the circumferential center position of the tooth 66A. Therefore, when the groove portion 53a is not provided, the flow of the magnetic flux B48a flowing between the tooth 66A and the rotor core 20 and the flow of the magnetic flux B48c flowing between the tooth 66D and the rotor core 20 are likely to greatly differ. As a result, there is a problem that the torque ripple tends to be large.

In the present embodiment, since the groove portion 53a is provided at a position where the magnetic flux density in the powering mode is high, a part of the magnetic flux B48c flowing from the tooth 66D to the rotor core 20 is blocked, and the magnetic flux flowing from the tooth 66D to the tooth 66B can be reduced. As a result, in the present embodiment, the difference between the flow of the magnetic flux B48a flowing between the tooth 66A and the rotor core 20 and the flow of the magnetic flux B48c flowing between the tooth 66D and the rotor core 20 is reduced, and the torque ripple caused by the difference in the flow of the magnetic flux is reduced, thereby achieving noise reduction. The groove portion 53a narrows the region between the groove portion 53a and the first flux barrier portion 51b and the region between the groove portion 53a and the second flux barrier portion 52a. As a result, the difference between the flow of the magnetic flux B48a flowing between the tooth 66A and the rotor core 20 and the flow of the magnetic flux B48c flowing between the tooth 66D and the rotor core 20 is further reduced, and the torque ripple caused by the difference in the flow of the magnetic flux is reduced, thereby further achieving noise reduction.

In addition, for example, when the magnetic flux flowing between the rotor 10 and the stator 60 includes a magnetic flux B48 of a 48th-order component as illustrated in Fig. 6, the magnetic flux flowing between the rotor 10 and the stator 60 also includes a magnetic flux B24 of a 24th-order component as illustrated by the two-dot chain line in Fig. 6. For example, the magnetic flux B24 flows between the tooth 66A located radially outside the circumferential center of the magnetic pole portion 70S and the teeth 66B and 66C adjacent to the tooth 66A in the circumferential direction through the rotor core 20. Referring to Fig. 6, for example, the magnetic flux B24 flows from the tooth 66A to the tooth 66B through the rotor core 20. The magnetic flux B24 of the 24th-order component hardly flows to the teeth 66D and 66E each arranged two teeth away from the tooth 66A in the circumferential direction.

In this case, according to the present embodiment, in a given state, the teeth 66D and 66E located radially outside the groove portions 53a and 53b are the teeth 63 arranged two teeth away from the tooth 66A in the circumferential direction. Therefore, in a given state, the magnetic flux B24 of the 24th-order component is less likely to flow through the teeth 66D and 66E and a portion of the rotor core 20 which is located radially inside the teeth 66D and 66E. As a result, even if the groove portions 53a and 53b are provided, the flow of the magnetic flux B24 of the 24th-order component is unlikely to be obstructed. Therefore, even if the groove portions 53a and 53b are provided, it is possible to suppress an increase in the torque ripple caused by the magnetic flux B24 of the 24th-order component. As described above, according to the present embodiment, when the powering mode is operated, the groove portions 53a and 53b can reduce the torque ripple caused by the magnetic flux B48 of the 48th-order component as described above, while an increase in the torque ripple caused by the magnetic flux B24 of the 24th-order component can be suppressed. Therefore, noise reduction can be achieved by reducing the torque ripple more suitably during an operation in the powering mode.

According to the present embodiment, in a given state, at least parts of the teeth 66B and 66C which are arranged between the tooth 66A, which is the given one tooth, and the teeth 66D and 66E, each of which is the other one tooth, in the circumferential direction so as to be adjacent to each other, are located radially outside the second magnet 42. Since at least parts of the teeth 66B and 66C are located radially outside the second magnet 42 in a given state, the magnetic flux B24 of the 24th-order component can suitably flow from the tooth 66A to the teeth 66B and 66C by the magnetic flux of the second magnet 42. Therefore, the magnetic flux B24 of the 24th-order component is less likely to flow to the teeth 66D and 66E each arranged two teeth away from tooth 66A. As a result, in a given state, the magnetic flux B24 of the 24th-order component is less likely to flow to the portion of the rotor core 20 located radially inside the teeth 66D and 66E. Therefore, even if the groove portions 53a and 53b are provided, the flow of the magnetic flux B24 of the 24th-order component can be further hardly inhibited. Therefore, even if the groove portions 53a and 53b are provided, noise reduction can be achieved by more suitably suppressing an increase in torque ripple caused by the magnetic flux B24 of the 24th-order component when the powering mode is operated.

In the magnetic pole portion 70N, a magnetic flux B48a of the magnetic flux B48 illustrated in Fig. 7 is, for example, a magnetic flux that is emitted radially inward from the circumferential center of the tooth 66A, passes through the rotor core 20, and returns to an end portion of the umbrella portion 63b of the tooth 66A on the first circumferential side (+ θ side). A magnetic flux B48a passes through a portion of the rotor core 20 which is located radially outside the second magnet 42. Since the magnetic pole portion 70N differs from the magnetic pole portion 70S only in the configurations of the groove portions 54a and 54b and the configurations of the groove portions 53a and 53b, the groove portions 54a and 54b will be mainly described below.

For example, the magnetic flux B48 of the 48th-order component flowing between rotor core 20 and stator 60 also includes, for example, a magnetic flux B48c illustrated in Fig. 7. The magnetic flux B48c is a magnetic flux flowing from the circumferential center of the tooth 66D to the tooth 66B adjacent to the tooth 66D through the rotor core 20. For example, the magnetic flux B48c is released from the tooth 66D into the rotor core 20, and then flows to the end of the umbrella portion 63b of the tooth 66B which is located on the first circumferential side (+θ side). When the magnetic flux B48c described above flows in large amount, the circumferential balance of the magnetic flux B48 of the 48th-order component is lost, and the torque ripple tends to be large.

On the other hand, according to the present embodiment, the rotor core 20 has the groove portion 54a. In a given state, the groove portion 54a recessed radially inward is disposed on the side (-θ side) closer to the circumferential center of the second magnet 42 than the circumferential center of the other one tooth 66D and reduces the gap with the first flux barrier portion 51b and the gap with the second flux barrier portion 52a. Therefore, the groove portion 54a easily narrows the path through which the magnetic flux B48c flows. As a result, it is possible to suppress the magnetic flux B48c from flowing much, and it is possible to suppress the circumferential balance of the magnetic flux B48 of the 48th-order component from being lost. The circumferential position of the groove portion 54a is disposed closer to the second flux barrier portion 52a than the circumferential position of the groove portion 53a in the magnetic pole portion 70S. The groove portion 54a makes a gap with the second flux barrier portion 52a narrower than the groove portion 53a in the magnetic pole portion 70S. Therefore, noise reduction can be achieved by further reducing the torque ripple during an operation in the regenerative mode.

In addition, since the groove portion 54a is provided at a position where the magnetic flux density in the regenerative mode is high, a part of the magnetic flux B48c flowing from the tooth 66D to the rotor core 20 is blocked, and the magnetic flux flowing from the tooth 66D to the tooth 66B can be reduced. As a result, in the present embodiment, the difference between the flow of the magnetic flux B48a flowing between the tooth 66A and the rotor core 20 and the flow of the magnetic flux B48c flowing between the tooth 66D and the rotor core 20 is reduced, and the torque ripple caused by the difference in the flow of the magnetic flux is reduced, thereby achieving noise reduction.

According to the present embodiment, in a given state, at least a part of the groove portion 54a is located radially inside the other one tooth 66B. Therefore, it is easy to suitably narrow the path through which the magnetic flux B48c released from the tooth 66D flows through the tooth 66B along the groove portion 54a. This makes it possible to further suppress the magnetic flux B48c from flowing in large amount. Therefore, noise reduction can be achieved by further reducing the torque ripple during an operation in the regenerative mode.

According to the present embodiment, the groove portion 54a is located radially outside the second flux barrier portion 52a. Therefore, the space between the groove portion 54a and the second flux barrier portion 52a in the radial direction can be suitably narrowed. This makes it easy to more suitably narrow the path through which the magnetic flux B48c released from the tooth 66D flows. Accordingly, it is possible to further suppress the magnetic flux B48c from flowing in large amount. Therefore, noise reduction can be achieved by further reducing the torque ripple during an operation in the regenerative mode.

The effect obtained by providing the groove portion 54a described above can be similarly obtained by the groove portion 54b. In the present embodiment, since the pair of groove portions 54a and 54b are provided, noise reduction can be achieved by more suitably reducing the torque ripple when operating in the regenerative mode.

According to the present embodiment, in a given state, the first circumferential side (+θ side) of the umbrella portion 63b of each of the teeth 66B and 66C arranged adjacent to the tooth 66A in the circumferential direction is located radially outside a corresponding one of the groove portions 54a and 54b. Therefore, in a given state, the magnetic flux B24 of the 24th-order component is less likely to flow through the teeth 66D and 66E each disposed two teeth away from the tooth 66A in the circumferential direction and a portion of the rotor core 20 which is located radially inside the teeth 66D and 66E. As a result, even if the groove portions 54a and 54b are provided, the flow of the magnetic flux B24 of the 24th-order component is unlikely to be obstructed. Therefore, even if the groove portions 54a and 54b are provided, it is possible to suppress an increase in the torque ripple caused by the magnetic flux B24 of the 24th-order component. As described above, according to the present embodiment, when the regenerative mode is operated, the groove portions 54a and 54b can reduce the torque ripple caused by the magnetic flux B48 of the 48th-order component as described above, while an increase in the torque ripple caused by the magnetic flux B24 of the 24th-order component can be suppressed. Therefore, noise reduction can be achieved by reducing the torque ripple more suitably during an operation in the regenerative mode.

According to the present embodiment, in a given state, at least parts of the teeth 66B and 66C which are arranged between the tooth 66A, which is the given one tooth, and the teeth 66D and 66E, each of which is the other one tooth, in the circumferential direction so as to be adjacent to each other, are located radially outside the second magnet 42. Since at least parts of the teeth 66B and 66C are located radially outside the second magnet 42 in a given state, the magnetic flux B24 of the 24th-order component can suitably flow from the tooth 66A to the teeth 66B and 66C by the magnetic flux of the second magnet 42. Therefore, the magnetic flux B24 of the 24th-order component is less likely to flow to the teeth 66D and 66E each arranged two teeth away from tooth 66A. As a result, in a given state, the magnetic flux B24 of the 24th-order component is less likely to flow to the portion of the rotor core 20 located radially inside the teeth 66D and 66E. Therefore, even if the groove portions 54a and 54b are provided, the flow of the magnetic flux B24 of the 24th-order component can be further hardly inhibited. Therefore, even if the groove portions 54a and 54b are provided, noise reduction can be achieved by more suitably suppressing an increase in torque ripple caused by the magnetic flux B24 of the 24th-order component when the regenerative mode is operated.

Fig. 8 is a diagram illustrating the values of torque ripples of the 24 and 48-order components when a rotary electric machine having the above groove portions and a rotary electric machine having no groove are driven in a powering mode and a regenerative mode, respectively. As illustrated in Fig. 8, the rotary electric machine having the groove portions was able to reduce the torque ripple caused by the magnetic flux of the 48th-order component as compared with the rotary electric machine having no groove portions in both the powering mode and the regenerative mode. In addition, similar to the rotary electric machine having no groove, the rotary electric machine having the groove can suppress an increase in torque ripple caused by the magnetic flux of the 24th-order component in the regenerative mode, and can achieve noise reduction by reducing the torque ripple caused by the magnetic flux of the 24th-order component in the powering mode as compared with the rotary electric machine having no groove.

According to the present embodiment, the rotary electric machine 1 is a three-phase AC rotary electric machine, and the number of slots is N × 6 when the number of poles is N. In the rotary electric machine 1 described above, the magnetic flux flowing between the rotor 10 and the stator 60 includes an (N × 3)th-order magnetic flux component, such as the magnetic flux B24 of the 24th-order component described above, and an (N × 6)th-order magnetic flux component, such as the magnetic flux B48 of the 48th-order component described above. For example, when N = 10, that is, when the rotary electric machine 1 is a 10-pole, 60-slot rotary electric machine, the magnetic flux flowing between the rotor 10 and the stator 60 includes a (10 × 3)th-order, that is, 30th-order magnetic flux component and a (10 × 6)th-order, that is, 60-order magnetic flux component. In such a case, providing the groove portions 53a and 53b and the groove portions 54a and 54b can reduce the torque ripple caused by the (N × 6)th-order magnetic flux component similarly to the case of the magnetic flux B48 of the 48th-order component described above and reduce noise by suppressing the increase in the torque ripple caused by the (N × 3)th-order magnetic flux component similarly to the case of the magnetic flux B24 of the 24th-order component described above. Therefore, providing the groove portions 53a and 53b and the groove portions 54a and 54b for the rotary electric machine 1 in which the number of poles is N and the number of slots is N × 6 can easily suitably obtain the effect of achieving noise reduction by reducing the torque ripple described above in both the powering mode and the regenerative mode.

According to the present embodiment, the coil 65 is formed by distributed winding and full-pitch winding. In the rotary electric machine 1 wound by the coils 65 in the above manner, the magnetic flux flowing between the rotor 10 and the stator 60 includes an (N × 3)th-order magnetic flux component, such as the magnetic flux B24 of the 24th-order component described above, and an (N × 6)th-order magnetic flux component, such as the magnetic flux B48 of the 48th-order component described above. In such a case, providing the groove portions 53a and 53b and the groove portions 54a and 54b can reduce the torque ripple caused by the (N × 6)th-order magnetic flux component and reduce noise by suppressing the increase in the torque ripple caused by the (N × 3)th-order magnetic flux component. Therefore, providing the groove portions 53a and 53b and the groove portions 54a and 54b for the rotary electric machine 1 in which the number of poles is N and the number of slots is N × 6 can easily suitably obtain the effect of achieving noise reduction by reducing the torque ripple described above in both the powering mode and the regenerative mode.

While the preferred embodiment of the present invention has been described above with reference to the accompanying drawings, it is obvious that the present invention is not limited to the embodiment. Various shapes, combinations, and the like of the constituent members in the above embodiment are only by way of example, and various modifications are possible based on design requirements and the like without departing from the scope of the present invention.

For example, the above embodiment has exemplified the configuration in which the pair of groove portions 53a and 53b are arranged in the first pattern and the pair of groove portions 54a and 54b are arranged in the second pattern. However, the present invention is not limited to this configuration. For example, a hole having a circumferential position arranged in the first pattern and penetrating the rotor core 20 in the axial direction and a hole having a circumferential position arranged in the second pattern and penetrating the rotor core 20 in the axial direction may be arranged on the outer peripheral side of the rotor core 20. The radial position of the hole having the circumferential position arranged in the first pattern and the radial position of the hole having the circumferential position arranged in the second pattern are preferably close to the outer periphery of the rotor core 20 within a manufacturable range.

The above embodiment has exemplified the configuration in which the groove portions 53a and 53b of the first pattern are provided in the magnetic pole portion 70S and the groove portions 54a and 54b of the second pattern are provided in the magnetic pole portion 70N. However, the embodiment may have the configuration in which the groove portions 53a and 53b of the first pattern are provided in the magnetic pole portion 70N and the groove portions 54a and 54b of the second pattern are provided in the magnetic pole portion 70S.

The rotary electric machine to which the present invention is applied is not limited to a motor, and may be a generator. In this case, the rotary electric machine may be a three-phase AC generator. The application of the rotary electric machine is not particularly limited. For example, the rotary electric machine may be mounted on a vehicle or may be mounted on equipment other than a vehicle. The number of poles and the number of slots of the rotary electric machine are not particularly limited. In the rotary electric machine, the coil may be wound using any winding method. The features described above in the present description may be appropriately combined as long as no conflict arises.

### Reference Signs List

1 rotary electric machine
10 rotor
20 rotor core
30 accommodation hole
40 magnet
41a, 41b first magnet
42 second magnet
51a, 51b, 51c, 51d first flux barrier portion
52a, 52b second flux barrier portion
53a, 53b, 54a, 54b groove portion
60 stator
61 stator core
62 core back
63, 66A, 66B, 66C, 66D, 66E tooth
65 coil
67 slot
70, 70N, 70S magnetic pole portion
IL1 magnetic pole center line (d-axis)
J center axis
θ1 first angle
θ2 second angle

## Claims

1. A rotary electric machine (1) comprising:
a rotor (10) rotatable about a center axis (J); and
a stator (60) located radially outside the rotor (10),
**characterized in that**
the rotor (10) includes a rotor core (20) having a plurality of accommodation holes (30) and a plurality of magnets (40) respectively accommodated in the plurality of accommodation holes (30),
the stator (60) includes a stator core (61) having an annular core back (62) surrounding the rotor core (61) and a plurality of teeth (63) extending radially inward from the core back (62) and arranged side by side at intervals in a circumferential direction and a plurality of coils (65) attached to the stator core (61),
the plurality of magnets (40) include a pair of first magnets (41a, 41b) arranged at an interval in the circumferential direction and extending in directions away from each other in the circumferential direction as extending from a radially inside toward a radially outside when viewed in the axial direction and a second magnet (42) arranged at a circumferential position between the pair of first magnets (41a, 41b) on a radially outside relative to a radially inner end portion of the pair of first magnets (41a, 41b) and extending in a direction orthogonal to the radial direction as viewed in the axial direction,
the pair of first magnets (41a, 41b) and the second magnet (42) constitute poles and include a plurality of magnets arranged in the circumferential direction, and
the rotor core (20) includes a pair of holes extending in the axial direction or a pair of groove portions (53a, 53b) provided in an outer peripheral surface which are arranged on both sides in the circumferential direction across a d-axis in a first pattern at a position of a first angle from the d-axis on an outer peripheral side in the radial direction when viewed in the axial direction and a pair of holes extending in the axial direction or a pair of groove portions (54a, 54b) provided in the outer peripheral surface which are arranged on both sides in the circumferential direction across the d-axis in a second pattern at a position of a second angle from the d-axis on the outer peripheral side in the radial direction when viewed in the axial direction, the second angle being different from the first angle, and the rotor core (20) has at least one magnetic pole portion (70) in which the pair of holes or the pair of groove portions (53a, 53b) are arranged at positions in the first pattern and at least one magnetic pole portion (70) in which the pair of holes or the pair of groove portions (54a, 54b) are arranged at positions in the second pattern.

2. The rotary electric machine (1) according to claim 1, **characterized in that** the magnetic pole portion (70) in which the pair of holes or the pair of groove portions (53a, 53b) are arranged in the first pattern and the magnetic pole portion (70) in which the pair of holes or the pair of groove portions (54a, 54b) are arranged in the second pattern are alternately provided in the circumferential direction.

3. The rotary electric machine (1) according to claim 1 or 2, **characterized in that** the tooth (63) includes a base portion (63a) extending radially inward from the core back (62) and an umbrella portion (63b) provided at a radially inner end portion of the base portion (63a) and protruding from the base portion (63a) to both sides in the circumferential direction, and
when a center position of one of the teeth in the circumferential direction coincides with the d-axis,
a circumferential center position of the pair of holes or the pair of groove portions (53a, 53b) in the first pattern as viewed in the axial direction overlaps an end portion on a side close to the d-axis in the circumferential direction of the umbrella portion (63b) of a tooth arranged two teeth away from the tooth that coincides with the d-axis in the radial direction, and
a circumferential center position of the pair of holes or the pair of groove portions (54a, 54b) in the second pattern as viewed in the axial direction overlaps a slot (67) arranged two teeth away from the tooth that coincides with the d-axis in the radial direction.

4. The rotary electric machine (1) according to any one of claims 1 to 3, **characterized in that** the rotor core (20) includes first flux barrier portions (51a, 51b) arranged in pairs so as to sandwich each of the first magnets (41a, 41b) in a direction in which each of the first magnets (41a, 41b) extends when viewed in the axial direction and a pair of second flux barrier portions (52a, 52b) arranged so as to sandwich the second magnet (42) in a direction in which the second magnet (42) extends as viewed in the axial direction,
the pair of holes or the pair of groove portions (53a, 53b) of the first pattern are arranged between a first flux barrier portion (51a, 51b), of the pair of first flux barrier portions (51a, 51b) arranged so as to sandwich one of the pair of first magnets (41a, 41b), which are located radially outside and one of the pair of second flux barrier portions (52a, 52b) in the circumferential direction, and
the pair of holes or the pair of groove portions (54a, 54b) of the second pattern are arranged at a position closer to one of the pair of second flux barrier portions (52a, 52b) in the circumferential direction than the pair of holes or the pair of groove portions (54a, 54b) of the second pattern.
